# EUROPEAN PATENT SPECIFICATION

(11) **EP 0 536 099 B1**
(45) Date of publication and mention of the grant of the patent: **16.10.1996**
(21) Application number: 92850215.2
(22) Date of filing: 11.09.1992
(51) Int. Cl.: H04Q 7/38

(54) **A method for avoiding an unnecessarily high energy consumption in mobile stations of a mobile telephone system**
Verfahren zur Vermeidung eines unnötig-hohen Energieverbrauchs in Mobilstationen
Procédé pour éviter une consommation d'énérgie inutilement élevée d'une station mobile

(30) Priority: 04.10.1991 SE 9102886
(43) Date of publication of application: 07.04.1993
(73) Proprietor: TELEFONAKTIEBOLAGET LM ERICSSON, 126 25 Stockholm (SE)
(72) Inventor: Lindroth, Lars Magnus, S-112 20 Stockholm (SE); Chambert, Georg William Robin, S-756 47 Uppsala (SE)
(74) Representative: Lövgren, Tage

(56) References cited:
- EP-A- 0 375 067
- EP-A- 0 443 516

## Description

### TECHNICAL FIELD

The present invention relates to a method for avoiding unnecessarily high energy consumption of mobile stations that are included in a digital time-multiplex mobile telephony system, in which each of the mobile stations, in an idle mode, normally listens on only each Nth time slot of a channel which is at least partially intended for transmitting mobile-station paging messages, e.g. the CCCH-channel in GSM (Groupe Spéciale Mobile), and in which it is possible to permit each such time slot to contain control information which instructs the mobile stations also to listen on a further time slot, an additional time slot, of said channel, this additional time slot appearing after a predetermined number of time slots.

### BACKGROUND ART

It is often desired to keep the energy consumed by mobile stations included in mobile telephony systems as low as possible. This applies in particular to regions in which a relatively large number of hand-held stations are found, for instance so-called pocket telephones, as stations of this kind have a limited battery capacity. Large cities are examples of regions in which a large number of hand-held stations are found. In the digital GSM-system, a group of mobile stations in their idle mode will listen solely on, e.g., each 18th time slot of the CCCH-channel (Common Control CHannel). Messages intended for paging mobile stations (paging messages) are transmitted on this channel, as are also messages concerning channel assignment (Immediate Assignment messages). The type of reception applied in the idle mode, as described above, is normally called DRX, which stands for discontinuous reception.

Each message transmitted on the CCCH-channel to a group of mobile stations includes an information section referred to as "page mode".This information section includes control information which informs the mobile stations in an idle mode how to listen to the CCCH-channel. By "normal page mode" is meant the aforesaid DRX-reception, i.e. only each Nth time slot, for instance time slot number N, shall be listened to. By "extended page mode" is meant that for each time slot listened to, the next alternate time slot shall also be listened to, i.e. for instance also time slot number N+2.

When applying an extended page mode, it is sometimes possible to transmit paging messages for which there is no room in the standard time slot in the next alternate time slot. If this is possible, it is due to the presence of the channel assignment messages and standard paging messages queuing for transmission in this time slot. Furthermore, the channel assignment messages are often given priority in relation to the paging messages. An extended page mode will generally reduce the time of establishing a call connection, particularly when the number of paging messages are unevenly distributed between different time slots. This time reduction, however, is obtained at the cost of higher energy consumption of the mobile stations, since it is necessary to listen to twice as many time slots than when applying the normal page mode. When the traffic on the CCCH-channel is high in the majority of time slots, the queuing time will only be reduced insignificantly when applying the extended page mode, despite the increase in energy consumption.

### DISCLOSURE OF THE INVENTION

The object of the present invention is to propose a method which will avoid unnecessarily high energy consumption of mobile stations that are included in a mobile telephony system of the aforedescribed kind. This is achieved by making a significant decision on each separate occasion as to whether an extended page mode should be applied, while taking into account the time gained in connecting a call and the increase in energy consumption. This is achieved by first deciding a percentage which corresponds to a maximum value of the percentage of paging messages that may be transmitted with an extended page mode. This percentage is preferably dependent on the geographical region in which the mobile stations are located. It is then decided, in each separate case, whether or not there is a need for an extended page mode, whether or not the additional time slot has a free space, and whether or not the aforesaid percentage has been exceeded.

The characteristic features of the invention are set forth in the following Claims.

### BRIEF DESCRIPTION OF THE DRAWINGS

The present invention will now be described in more detail with reference to the accompany drawings, in which Figures 1 and 2 illustrate a time frame in which different time slots are marked; and Figures 3 and 4 are flow sheets which illustrate respectively a first and a second exemplifying embodiment of the inventive method.

### BEST MODE OF CARRYING OUT THE INVENTION

The invention will now be described in more detail with reference to two exemplifying embodiments thereof and with reference to a GSM-system. As will be evident from the aforegoing, the time taken to establish a call connection with a mobile station can sometimes be reduced by applying an extended page mode. However, this will increase the energy consumed by this station and also by a group of mobile stations which, in idle mode, listen on the same time slot. It can be mentioned that the invention is intended to be included in the software of the base stations.

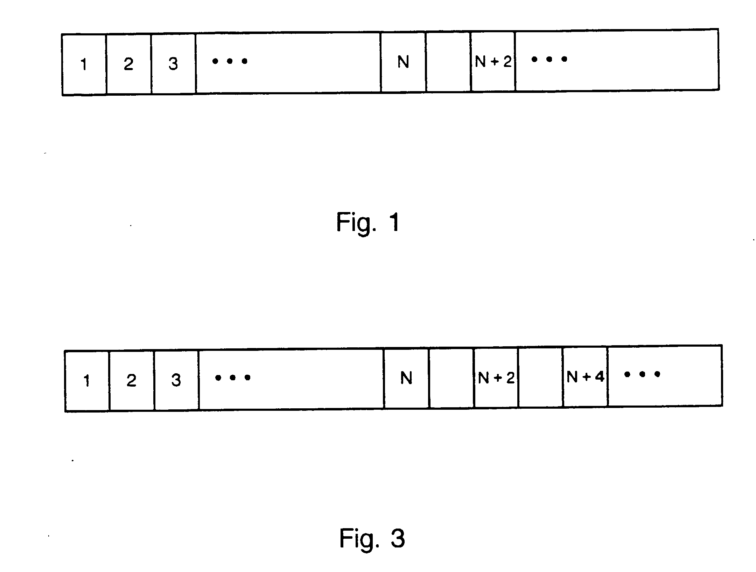

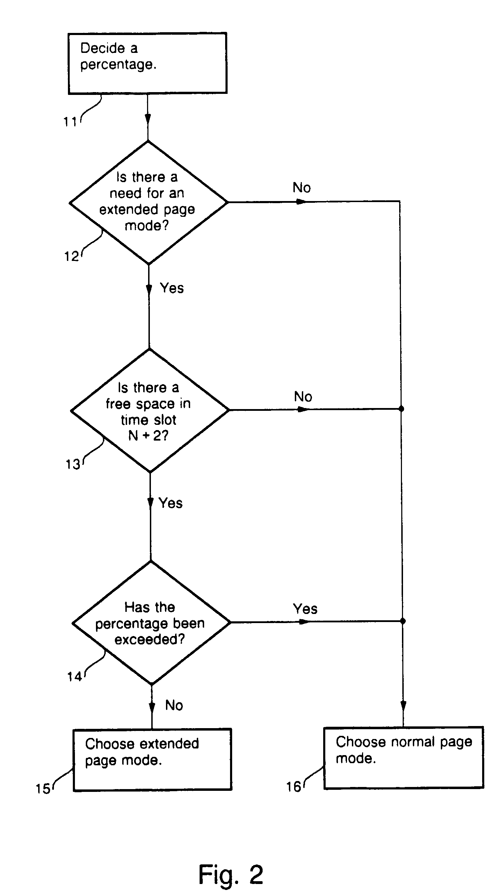

The first of these exemplifying embodiments will now be described with reference to Figures 1 and 2. Figure 1 illustrates a time frame in the time-multiplex mobile telephony system. The time frame is divided into time slots, of which time slots numbered 1, 2, 3, N and N+2 have been shown. The exemplifying embodiment is intended to explain how a decision is reached as to whether or not an extended page mode for time slot number N shall be applied.

The following procedure is followed when deciding those instances when an extended page mode shall be applied, while referring to the flow sheet of Figure 2:

The first procedural step taken is that of deciding a percentage value which denotes a maximum value of the percentage of paging messages that may be transmitted with an extended page mode, see block 11. The energy consumption of the mobile stations is dependent on this percentage, and consequently different percentages can be decided in different geographical regions. The percentage is preferably chosen so that low current consumption will have priority over fast connection establishment, for instance in large cities and towns in which there are probably a relatively large number of hand-carried stations, while giving priority to rapid connection establishment over low current consumption, for instance in sparsely populated areas where there are probably only a relatively few hand-carried stations. The percentage is therefore preferably given a higher value in sparsely populated areas than in large cities or towns.

In practice, this percentage value can be decided by an operator monitoring the mobile telephony system, or may be found in the form of a parameter which has been pre-installed in the system for all, different geographical areas.

The second procedural step involves ascertaining whether or not there is a need for an extended page mode, see block 12. This need will depend on the number of paging messages and the number of channel assignment messages that are queuing for transmission in the time slot concerned, i.e. in time slot number N. In the case of paging messages, there is found a queue for each time slot in GSM, whereas the channel assignment messages are placed in a separate queue which is common to all mobile stations. As before mentioned, the channel assignment messages often have priority over the paging messages.

In the third procedural step, it is ascertained whether or not the next alternate time slot, i.e. time slot number N+2, has a free space, see Figure 1 and block 13 in Figure 2. This will, of course, depend on how many paging messages and channel assignment messages are queuing for transmission in this time slot.

In the fourth procedural step, it is ascertained whether or not the percentage decided has been exceeded, see block 14. This can be achieved in several ways. For instance, a so-called moving average can be calculated for applying an extended page mode, wherein an average value is calculated for a predetermined number of the latest transmission occasions on the time slot concerned. The average value is then compared with the decided percentage value, thereby enabling it to be ascertained whether or not this percentage value has been exceeded.

Alternatively, it can be ascertained whether or not the percentage value has been exceeded by applying a so-called leaky bucket method. Each time a given time slot appears, a count value belonging to this time slot will either increase or decrease, depending on whether an extended page mode is applied or not. The count value is compared with a threshold value in order to decide whether the percentage value has been exceeded or not. Each time slot has, of course, its own count value. In order to enable the method to be applied for different percentage values, the size of the step with which the count value is changed in one direction is dependent on the value of the percentage. This enables the same threshold value to be used for all percentages.

As will also be seen from the flow sheet, see block 15, a decision is reached concerning the application of an extended page mode for time slot number N when the following conditions are fulfilled simultaneously: There shall be a need for an extended page mode (procedural step two above). Time slot number N+2 shall have a free place (procedural step three above). The decided percentage shall not be exceeded (procedural step four above).

As will be seen from the flow sheet, block 16, a normal page mode is applied when any one of the questions asked in blocks 12 and 13 is answered in the negative, or when the question asked in block 14 is answered in the positive.

It can be mentioned that mobile stations which listen on an additional time slot, e.g. time slot number N+2, in an extended page mode need not pay attention to the information section "page mode" in this additional time slot, since this information section is intended for those stations which normally listen on the time slot.

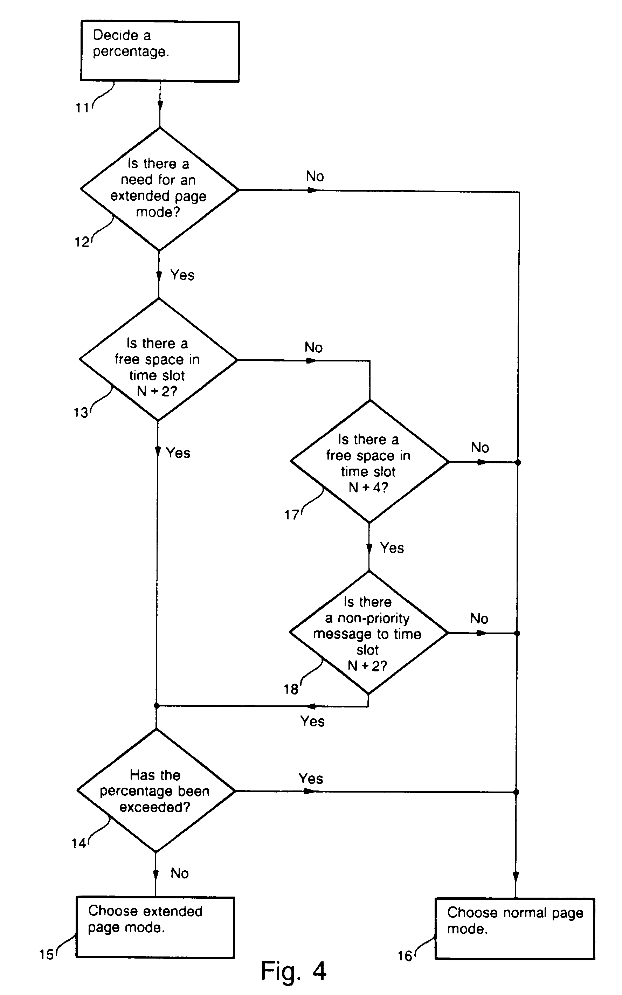

A second exemplifying embodiment of the invention will now be described, with particular reference to Figures 3 and 4. Figure 3 is a time frame which is similar to the time frame shown in Figure 1, with the exception that a time slot number N+4 has also been shown. Figure 4 is a flow sheet which coincides generally with the flow sheet shown in Figure 2, but which also contains two further function blocks. Those blocks in Figure 4 which are also found in Figure 2 have been identified in the same manner as before. The second embodiment is based on the assumption that it is sometimes meaningful to apply an extended page mode even when no free space is found in the additional time slot, i.e. in time slot number N+2.

Three procedural steps are first carried out, see blocks 11-13, which coincide with the procedural steps one to three described above, i.e. the steps of determining a percentage, ascertaining whether or not there is a need for an extended page mode, and ascertaining whether time slot number N+2 has a free space.

When it is ascertained in the third procedural step that there is no free space in time slot number N+2, it is ascertained in a fourth procedural step, see block 17, whether or not there is a free space in the time slot which appears two time slots later on, i.e. time slot number N+4; see also Figure 3. If the time slot N+4 has a free space, a message for which no space is found in time slot number N can be sent in time slot N+2 provided that a message which is in the queue for transmission in time slot number N+2 can be moved to time slot number N+4.

In order for a message to be moved from time slot number N+2 to time slot number N+4, it is necessary that none of the messages which should have been transmitted in time slot number N+2 is a priority message, for instance a channel assignment message. Consequently, it is ascertained in a fifth procedural step whether or not a non-priority message is found in the queue to time slot number N+2, see block 18.

According to this embodiment, it is ascertained in a sixth procedural step whether or not the decided percentage has been exceeded, in the same manner as that in step four of the first exemplifying embodiment, see block 14.

In this case, a decision to apply an extended page mode is reached, provided that the following conditions are fulfilled simultaneously: There is a need for an extended page mode (procedural step two). Time slot number N+4 has a free space (procedural step four according to the second embodiment). A non-priority message is found in the queue to time slot number N+2 (procedural step five according to the second embodiment). The relevant percentage has not been exceeded (procedural step six according to the second embodiment).

It will be seen from the flow sheet, see block 16, that a normal page mode is applied if one of the questions in blocks 12, 17 and 18 has been answered in the negative, or if the question asked in block 14 has been answered in the positive.

It will be understood that the invention is not restricted to the aforedescribed exemplifying embodiments thereof, and that modifications can be made within the scope of the following Claims. For instance, the order in which the procedural steps are carried out may be changed in different ways. Naturally, in order to prepare a place for a message which cannot obtain a place in time slot number N, it is also possible to ascertain whether or not there is a free space not only in time slots N+2 and N+4 but also in time slot N+6, and so on. Neither is the invention restricted to use in a GSM-system, but can probably be applied in other mobile telephony systems as well.

## Claims

1. A method for avoiding unnecessarily high energy consumption of mobile stations included in a digital time-multiplex mobile telephony system, in which each of the mobile stations, in an idle mode, normally listens on only each Nth time slot of a channel which is at least partially intended for transmitting mobile station paging messages, e.g. the CCCH-channel in GSM, and in which it is possible to permit each such time slot (N) to contain control information which instructs the mobile stations also to listen on a further time slot, an additional time slot (N+2), of said channel, this additional time slot appearing after a predetermined number of time slots, **characterized** in that the decision to permit a given time slot (N) to contain said control information is reached in accordance with the following procedural steps:
a) deciding (11) a percentage corresponding to a maximum value for the percentage of messages which may contain said control information;
b) ascertaining (12) whether or not there is a need for said given time slot (N) to contain said control information;
c) ascertaining (13) whether or not the additional time slot (N+2) contains a free space;
d) ascertaining (14) whether or not the percentage has been exceeded for said given time slot (N);
and in that a decision (15) that said given time slot (N) shall contain said control information is reached when a need according to b) is found, when, at the same time, a free place is found according to c), and when, at the same time, the percentage according to d) has not been exceeded.

2. A method according to Claim 1, **characterized** by ascertaining whether or not the percentage has been exceeded by calculating a moving average value and comparing this average value with the percentage.

3. A method according to Claim 1, **characterized** by ascertaining whether or not the percentage has been exceeded by applying a leaky-bucket-method, and by comparing a value calculated thereby with the percentage.

4. A method according to Claim 1, **characterized** in that when no free space is found in the additional time slot (N+2), the process of reaching said decision also includes the following procedural steps:
e) ascertaining (17) whether or not a free space is found in still another time slot, a second additional time slot (N+4) of said channel, said second additional time slot appearing a predetermined number of time slots after the first mentioned additional time slot (N+2);
f) ascertaining (18) whether or not said first additional time slot (N+2) contains a non-priority message;
and in that a decision (15) to the effect that said given time slot (N) shall contain said control information is reached when a need according to b) is found, when, at the same time, a free space according to e) is found in said second additional time slot, when, at the same time, at least one non-priority message according to f) is found, and when, at the same time, the percentage according to d) has not been exceeded.

5. A method according to any one of Claims 1-4, **characterized** in that the percentage decided is dependent on the geographical region in which the mobile stations are located; and in that the percentage is decided in a manner such as to be higher in those regions in which there is probably found relatively few hand-carried mobile stations than in those regions in which relatively many hand-carried mobile stations are probably found.

## Patentansprüche

1. Verfahren zum Vermeiden eines unnötig hohen Energieverbrauchs von mobilen Stationen, die in einem digitalen Zeitmultiplex-Mobiltelefoniesystem enthalten sind, in dem jede der mobilen Stationen in einem Ruhezustand normalerweise nur jeden N-ten Zeitschlitz eines Kanals abhört, der wenigstens teilweise zum Übertragen von Paging-Nachrichten für mobile Stationen vorgesehen ist, z.B. der CCCH-Kanal in GSM und in dem es möglich ist, jedem derartigen Zeitschlitz (N) zu erlauben, Steuerinformation zu enthalten, die den mobilen Stationen befiehlt, auch einen weiteren Zeitschlitz, einen zusätzlichen Zeitschlitz (N+2), des Kanals abzuhören, wobei dieser zusätzliche Zeitschlitz nach einer vorgegebenen Anzahl von Zeitschlitzen auftritt,
***dadurch gekennzeichnet, daß***
die Entscheidung darüber, einem gegebenen Zeitschlitz (N) zu erlauben, die Steuerinformation zu enthalten, entsprechend den folgenden Prozeßschritten getroffen wird:
a) Bestimmen (11) eines prozentualen Anteils entsprechend einem maximalen Wert für den prozentualen Anteil von Nachrichten, die die Steuerinformation enthalten können;
b) Feststellen (12), ob eine Notwendigkeit besteht oder nicht, daß der gegebene Zeitschlitz (N) die Steuerinformation enthält;
c) Feststellen (13), ob der zusätzliche Zeitschlitz (N+2) einen freien Platz enthält oder nicht;
d) Feststellen (14), ob der prozentuale Anteil für den gegebenen Zeitschlitz (N) überschritten worden ist oder nicht; und
daß eine Entscheidung (15), daß der gegebene Zeitschlitz (N) die Steuerinformation enthalten soll, getroffen wird, wenn eine Notwendigkeit gemäß b) gefunden wird, wenn gleichzeitig ein freier Platz gemäß c) gefunden wird, und wenn gleichzeitig der prozentuale Anteil gemäß d) nicht überschritten worden ist.

2. Verfahren nach Anspruch 1, dadurch gekennzeichnet, daß festgestellt wird, ob der prozentuale Anteil überschritten worden ist oder nicht, indem ein sich bewegender Durchschnittswert berechnet und dieser Durchschnittswert mit dem prozentualen Anteil verglichen wird.

3. Verfahren nach Anspruch 1, dadurch gekennzeichnet, daß festgestellt wird, ob der prozentuale Anteil überschritten worden ist, indem ein Leckbehälter-Verfahren (Leaky-Bucket-Verfahren) angewendet wird und indem ein Wert, der damit berechnet wird, mit dem prozentualen Anteil verglichen wird.

4. Verfahren nach Anspruch 1, dadurch gekennzeichnet, daß wenn kein freier Platz in dem zusätzlichen Zeitschlitz (N+2) gefunden wird, der Prozeß des Treffens der Entscheidung auch die folgenden Prozeßschritte umfaßt:
e) Feststellen (17), ob ein freier Platz in noch einem anderen Zeitschlitz, einem zweiten zusätzlichen Zeitschlitz (N+4) des Kanals, gefunden wird oder nicht, wobei der zusätzliche Zeitschlitz eine vorgegebene Anzahl von Zeitschlitzen nach dem zuerst erwähnten zusätzlichen Zeitschlitz (N+2) auftritt;
f) Feststellen (18), ob der erste zusätzliche Zeitschlitz (N+2) eine Nicht-Prioritäts-Nachricht enthält oder nicht; und
daß eine Entscheidung (15) bezüglich der Tatsache, daß der gegebene Zeitschlitz (N) die Steuerinformation enthalten soll, getroffen wird, wenn eine Notwendigkeit gemäß b) festgestellt wird, wenn gleichzeitig ein freier Platz gemäß e) in dem zweiten zusätzlichen Zeitschlitz festgestellt wird, wenn gleichzeitig wenigstens eine Nicht-Prioritäts-Nachricht gemäß f) gefunden wird, und wenn gleichzeitig der prozentuale Anteil gemäß d) nicht überschritten worden ist.

5. Verfahren nach einem der Ansprüche 1-4, dadurch gekennzeichnet, daß der bestimmte prozentuale Anteil von dem geographischen Gebiet abhängt, in dem sich die mobilen Stationen befinden; und daß der prozentuale Anteil in einer Weise bestimmt wird, so daß er in denjenigen Bereichen, in denen wahrscheinlich relativ wenige tragbare mobile Stationen angetroffen werden, höher ist, als in denjenigen Bereichen, in denen wahrscheinlich relativ viele tragbare mobile Stationen angetroffen werden.

## Revendications

1. Procédé pour éviter une consommation d'énergie inutilement élevée de stations mobiles qui font partie d'un système de téléphonie mobile numérique en multiplex temporel, dans lequel chacune des stations mobiles, dans un mode de repos, fonctionne normalement en écoute seulement sur un créneau temporel sur N d'un canal qui est au moins partiellement destiné à transmettre des messages de recherche de stations mobiles, par exemple le canal CCCH dans le système GSM, et dans lequel il est possible de faire en sorte que chaque créneau temporel de ce type (N) contienne une information de commande qui indique aux stations mobiles de fonctionner également en écoute sur un autre créneau temporel, ou créneau temporel supplémentaire (N+2), de ce canal, ce créneau temporel supplémentaire apparaissant après un nombre prédéterminé de créneaux temporels,
**caractérisé** en ce que la décision de permettre à un créneau temporel (N) donné de contenir l'information de commande est obtenue conformément aux étapes de procédure suivantes :
a) on choisit (11) un pourcentage correspondant à une valeur maximale pour le pourcentage de messages qui peuvent contenir l'information de commande;
b) on détermine (12) s'il est nécessaire ou non que le créneau temporel (N) donné contienne l'information de commande;
c) on détermine (13) si le créneau temporel supplémentaire (N+2) contient ou non un espace libre;
d) on détermine (14) si le pourcentage a été dépassé ou non pour le créneau temporel (N) donné; et en ce qu'on arrive à une décision (15) indiquant que le créneau temporel (N) donné doit contenir l'information de commande, lorsqu'une nécessité définie en b) est trouvée, lorsque, simultanément, un espace libre est trouvé en c), et lorsque, simultanément, le pourcentage mentionné en d) n'a pas été dépassé.

2. Procédé selon la revendication 1, caractérisé en ce qu'on détermine si le pourcentage a été dépassé ou non en calculant une valeur moyenne mobile et en comparant cette valeur moyenne avec le pourcentage.

3. Procédé selon la revendication 1, caractérisé en ce qu'on détermine si le pourcentage a été dépassé ou non en appliquant un procédé du sceau à fuite, et en comparant avec le pourcentage une valeur calculée par ce procédé.

4. Procédé selon la revendication 1, caractérisé en ce que lorsque aucun espace libre n'est trouvé dans le créneau temporel supplémentaire (N+2) le processus pour parvenir à la décision précitée comprend également les étapes de procédure suivantes :
e) on détermine (17) si un espace libre est trouvé ou non dans encore un autre créneau temporel, c'est-à-dire un second créneau temporel supplémentaire (N+4) du canal, ce second créneau temporel supplémentaire apparaissant un nombre de créneaux temporels prédéterminé après le créneau temporel supplémentaire (N+2) mentionné en premier;
f) on détermine (18) si le premier créneau temporel supplémentaire (N+2) contient un message non prioritaire;
et en ce qu'une décision (15) indiquant que le créneau temporel (N) donné doit contenir l'information de commande, est atteinte lorsqu'une nécessité définie en b) est trouvée, lorsque, simultanément, un espace libre mentionné en e) est trouvé dans le second créneau temporel supplémentaire, lorsque, simultanément, au moins un message non prioritaire mentionné en f) est trouvé, et lorsque, simultanément, le pourcentage mentionné en d) n'a pas été dépassé.

5. Procédé selon l'une quelconque des revendications 1-4, caractérisé en ce que le pourcentage choisi dépend de la région géographique dans laquelle se trouvent les stations mobiles; et en ce que le pourcentage est choisi d'une manière telle qu'il soit plus élevé dans des régions dans lesquelles on trouve probablement relativement peu de stations mobiles utilisées à la main, que dans des régions dans lesquelles on trouve probablement relativement beaucoup de stations mobiles utilisées à la main.
